# FASCICULE DE BREVET EUROPEEN

(11) **EP 0 558 377 B1**
(45) Date de publication et mention de la délivrance du brevet: **16.07.1997**
(21) Numéro de dépôt: 93400393.0
(22) Date de dépôt: 17.02.1993
(51) Int. Cl.: H04N 7/14

(54) **Codec vidéo, notamment visiophonique**
Videocodec, insbesondere für ein Bildtelefon
Videocodec, especially for videophone

(30) Priorité: 24.02.1992 FR 9202103
(43) Date de publication de la demande: 01.09.1993
(73) Titulaire: ALCATEL BUSINESS SYSTEMS, F-75008 Paris (FR)
(72) Inventeur: Secher, Fernand, F-22560 Pleumeur Bodou (FR); Thiberville, Jean, F-22560 Trebeurden (FR); Douhet, Gérard, F-67640 Fegersheim (FR); Freund, Christian, F-67200 Strasbourg (FR); Rasse, Yves, F-67000 Strasbourg (FR)
(74) Mandataire: Schaub, Bernard

(56) Documents cités:
- EP-A- 0 360 026
- US-A- 4 949 169
- PATENT ABSTRACTS OF JAPAN vol. 11, no. 314 (E-549)19 Mai 1987 & JP-A-62 108 690 (NIPPON TELEGR & TELEPH CORP) 6 Novembre 1985

## Description

L'invention concerne un codec vidéo, notamment destiné à des applications visiophoniques et en particulier à un terminal de réseau numérique à intégration de services.

De manière connue, la mise en communication de terminaux d'un réseau numérique à intégration de services (RNIS) pour des communications visiophoniques impliquent l'usage de lignes à haut débit entre terminaux interconnectés pour la transmission des signaux vidéo en raison de la quantité d'informations contenues dans chaque image.

Or, bien qu'il soit techniquement possible de mettre de telles lignes à disposition des usagers, il n'est économiquement pas envisageable de le faire à ce jour, le coût en étant tout-à-fait prohibitif.

Ceci a conduit à chercher des solutions permettant de réduire la quantité d'informations à transmettre, notamment à l'aide de techniques de compression des données d'image et de prédiction temporelle, qui tendent à ne faire transmettre que les informations indispensables et ce sous la forme la plus compacte possible.

L'article "VISAGES" de J. GUICHARD et G. EUDES paru en 1990 dans le N°140 de la revue "L'Echo des Recherches", publiée à Issy-les-Moulineaux, France, fait ainsi état d'un programme d'études destiné à permettre la transmission d'images animées entre des visiophones par l'intermédiaire de canaux dont le débit est égal à ou multiple de 64 Kbit/s, en accord avec la recommandation H261 du CCITT. Ces études envisagent le raccordement individuel de visiophones au niveau d'un accès de base de réseau RNIS qui offre un débit utile de 144 Kbit/s réparti entre deux canaux B de 64 Kbit/s et un canal D de 16 Kbit/s.

S'il est ainsi possible de considérablement réduire le débit numérique nécessaire à la transmission d'images animées entre des visiophones temporairement interconnectés par l'intermédiaire d'un réseau RNIS, il n'en demeure pas moins que chacun de ces visiophones doit être apte à traiter tant l'ensemble des informations d'image qu'il capte localement à des fins de compression, préalablement à leur transmission sous forme compressée, que l'ensemble des informations d'image à reconstituer localement, après décompression des informations d'image télétransmises par le réseau RNIS.

En conséquence, la complexité des opérations à effectuer sur les données binaires d'information d'image et les volumes de mémoire à prévoir pour le stockage temporaire de ces données binaires sont tels que les opérations de compression et de décompression sont classiquement effectuées au moyen d'unités physiquement distinctes, respectivement dites de codage ou de décodage vidéo, qui, complexes, mettent en oeuvre un grand nombre d'éléments.

L'agencement de ces éléments n'est pas optimal, et les codecs connus sont donc coûteux, encombrants et par conséquent peu exploitables pour des applications, telle l'application visiophonique, pour lesquelles une grande diffusion est recherchée.

L'invention propose donc un codec vidéo, notamment pour applications visiophoniques et en particulier pour terminal visiophonique de réseau numérique à intégration de services. Ce codec est prévu pour pouvoir recevoir, d'une part, des signaux d'image provenant d'une caméra de télévision locale afin de les émettre, après les avoir compressés et codés selon des procédés connus et à des fins de transmission, vers une unité de décodage vidéo distante et compatible, notamment d'un autre codec vidéo, par l'intermédiaire d'une ligne de transmission numérique, notamment de type téléphonique, et pour recevoir d'autre part, des signaux d'image similairement compressés et codés par une unité de codage vidéo distante, en particulier dudit autre codec vidéo, par l'intermédiaire de la ligne de transmission numérique, afin de les décompresser et décoder au profit d'un récepteur à écran de télévision localement relié à lui. Selon une caractéristique de l'invention, ce codec vidéo comporte une unité de traitement, de type circuit intégré, assurant en liaison avec un plan mémoire externe unique, tant la compression et le codage des données à émettre que la décompression et le décodage des données reçues, ladite unité de traitement comportant un ensemble formé par un opérateur de transformation discrète en cosinus, dit DCT, et un quantificateur montés en série, ledit ensemble étant relié par ledit opérateur DCT à un premier port d'un opérateur, dit vidéo, fonctionnant alternativement comme additionneur ou comme soustracteur, dont un second port est relié à une première branche d'une liaison bus multifilaire et dont un troisième port est relié à la sortie d'un filtre numérique passe-bas, dit de boucle, ledit ensemble étant exploité en partage de temps en association avec ledit filtre de boucle, ladite unité fonctionnant, d'une part, premièrement en direct puis en inverse en ce qui concerne ledit ensemble, pour le traitement des macroblocs d'image à l'émission, d'autre part, en inverse en ce qui concerne ledit ensemble, pour le traitement des macroblocs d'image à la réception. Ledit plan mémoire unique comporte une mémoire externe et principale reliée par ladite liaison bus multifilaire à l'unité de traitement pour le stockage temporaire d'images, respectivement à des fins d'émission, de réception et de traitement avant émission ou après réception, ainsi qu'éventuellement à des fins d'incrustation locale.

L'invention, ses caractéristiques et ses avantages sont précisés dans la description qui suit en liaison avec les figures ci-dessous répertoriées.

Les figures 1, 2 et 3 présentent respectivement un schéma de principe d'un codec vidéo classique, et des unités de codage et de décodage vidéo composant ce codec.

La figure 4 présente un schéma de principe d'un codec vidéo selon l'invention

La figure 5 présente un schéma synoptique d'un codec vidéo selon l'invention et plus particulièrement de l'unité de traitement de ce codec.

La figure 6 présente un exemple d'organisation physique interne d'une mémoire principale pour codec selon l'invention.

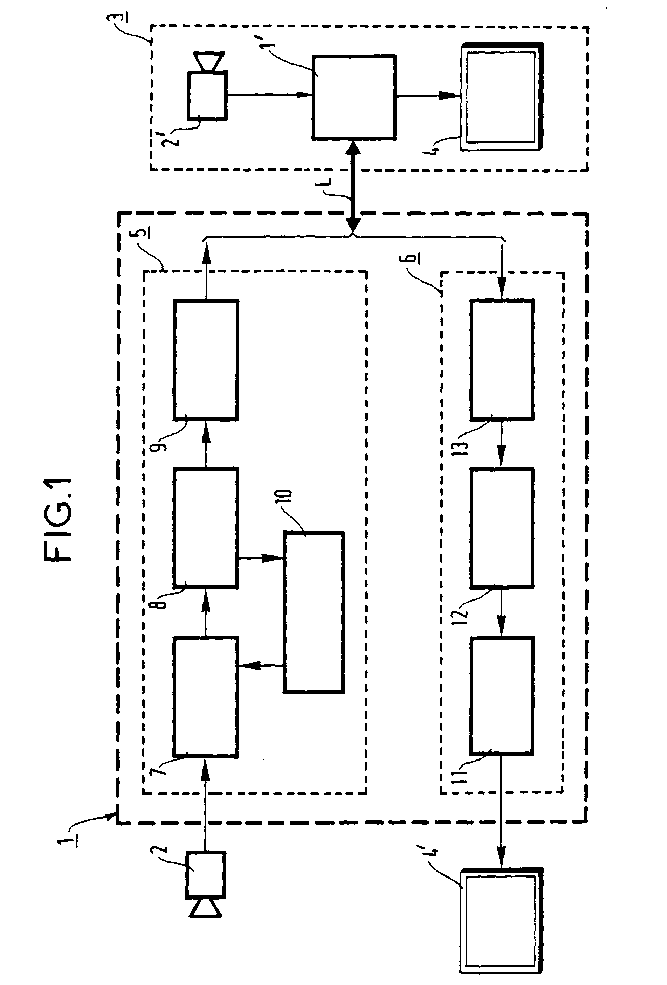

Le codec vidéo 1, d'architecture usuelle, montré en figure 1 est destiné à permettre le codage des signaux d'image vidéo fournis par une caméra de télévision 2 en vue de leur transmission par l'intermédiaire d'une ligne numérique bidirectionelle L d'un réseau téléphonique, non développé ici, à un autre codec 1' d'un appareillage distant 3 doté d'un récepteur à écran de télévision 4 permettant de présenter les images filmées, chaque codec 1 ou 1' permettant usuellement tant le codage des signaux d'image vidéo produits par une caméra associée à lui, telle 2 ou 2' en vue de leur transmission que le décodage des signaux transmis au moyen de la ligne numérique L en signaux d'image vidéo exploitables par un récepteur à écran de télévision tel 4 ou 4'.

A cet effet, ce type de codec vidéo, qui est usuellement dépendant d'un processeur et d'une horloge externes non représentés, comporte d'une part une unité de codage vidéo 5 apte à recevoir les signaux émanant de la caméra 2 et à les traiter de manière à pouvoir transmettre, par l'intermédiaire de la ligne L, toutes les informations nécessaires à la reconstitution des images, filmées par la caméra 2, au niveau du récepteur 4 de l'appareillage distant 3, et cela sous une forme et avec un débit respectivement compatibles avec ceux permis par la ligne L, d'autre part une unité de décodage vidéo 6, apte à reconstituer à partir des informations qu'elle reçoit, par l'intermédiaire de la ligne en provenance du codec 1', les signaux d'image vidéo nécessaires à la restitution sur l'écran du récepteur 4 des images filmées par la caméra 2'.

L'unité de codage vidéo 5 comporte essentiellement un codeur vidéo 7 recevant les signaux issus de la caméra 2 et en sortie duquel est placée une mémoire tampon d'émission 8, elle-même reliée à la ligne numérique L par l'intermédiaire d'un circuit 9 d'insertion de codes de correction d'erreur, un régulateur de débit 10 est également associé à la mémoire d'émission 8 et au codeur vidéo 7 pour permettre à ce dernier d'adapter son débit en fonction du volume d'informations à transmettre sur la ligne numérique L déjà contenu dans cette mémoire d'émission 8.

L'unité de décodage vidéo 6 comporte essentiellement un décodeur vidéo 11 recevant les informations transmises par la ligne numérique L en provenance du codec 1' de l'appareillage distant 3, ces informations lui sont fournies par l'intermédiaire d'une mémoire tampon de réception 12 qui les reçoit elle-même d'un circuit de détramage de codes de corrections d'erreur 13 apte à traiter les informations introduites à son intention par un circuit d'insertion de codes de correction d'erreur correspondant usuellement au circuit d'insertion 9 du codec vidéo 1 qui le comporte lui-même.

Les circuits d'insertion 9 et de détramage 13 qui peuvent être d'un type classique et qui n'ont qu'un rapport indirect avec l'objet de la présente invention ne seront pas détaillés plus avant ici.

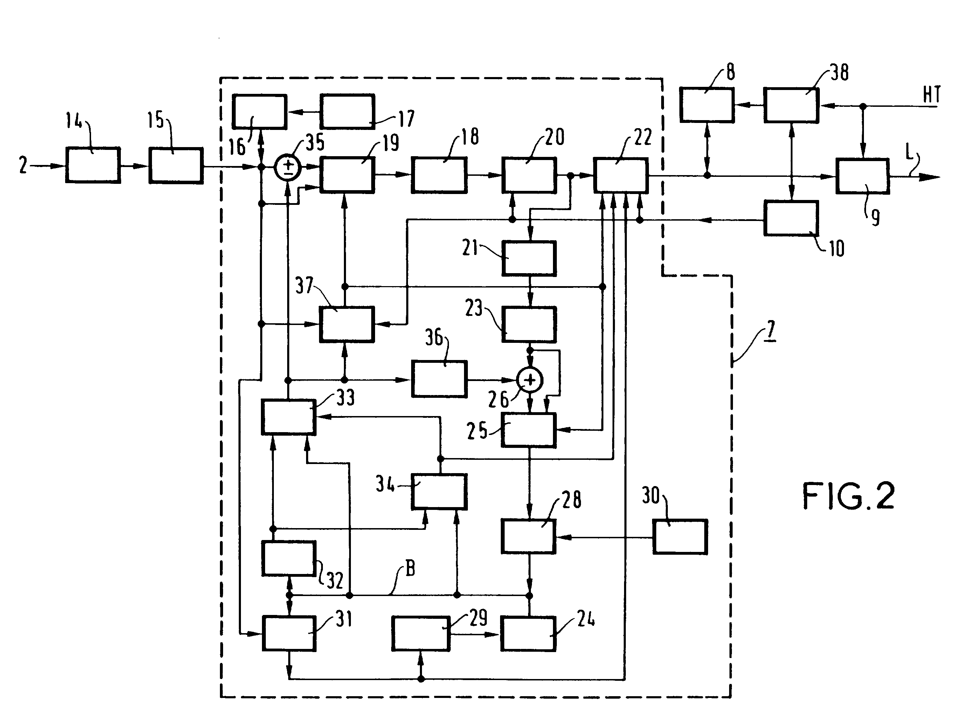

Un exemple d'unité de codage 5 est montré en figure 2, cette unité est ici agencée de manière à se conformer à la recommandation H261 évoquée plus haut et en conséquence à recevoir les signaux d'image vidéo que lui fournit la caméra de télévision 2 sous la forme de signaux analogiques de luminance et de chrominance normalisés en standard 50 Hz, 625 lignes ou 60Hz, 525 lignes.

Ces signaux reçus sont généralement numérisés par l'intermédiaire d'un convertisseur analogique/numérique 14 avant d'être transmis à un convertisseur de standard 15 où ils subissent une conversion à un format commun intermédiaire, tel que le format normal CIF ou le format réduit au quart QCIF prévus dans la recommandation H261.

Cette conversion à un format intermédiaire commun est destiné à permettre un traitement compressif des informations d'image en vue de leur transmission par la ligne téléphonique L, le codeur vidéo 7 travaillant ici sur des images non entrelacées codées en composantes de luminance et de chrominance.

Chaque image est considérée pour le traitement comme divisée en un même nombre de groupes de blocs composés chacun d'un même nombre de macroblocs; ces nombres sont respectivement de trois et trente trois dans le cas d'une image au format QCIF.

Chaque macrobloc correspond aux points d'une portion d'image qui est décomposée d'une part en un bloc de luminance, de type seize par seize, et en deux blocs de chrominance, distincts et de type huit par huit.

Ces deux derniers sont sous-échantillonnés par rapport au bloc de luminance correspondant qui se rapporte aux points de la même portion d'image couverte au moyen de quatre blocs matriciels de luminance comprenant huit lignes et huit colonnes chacun.

Dans la mesure où les signaux d'image vidéo reçus de la caméra 2 sont obtenus par balayage ligne à ligne des images et où le traitement de ces images s'effectue au niveau de blocs, groupes de blocs, il est prévu une mémoire adressable 16, dite de conversion de balayage en entrée du codeur vidéo 7, proprement dit, pour permettre un stockage temporaire d'informations numérisées d'image provenant du convertisseur de standard 15 et un transfert d'informations préalablement stockées vers les circuits du codeur vidéo où le traitement est effectué.

Un auxiliaire d'adressage 17 est classiquement associé à la mémoire de conversion de balayage 16 pour assurer l'adressage en écriture et en lecture de cette dernière sous le contrôle d'un agencement d'horloge non figuré de supervision du codec 1.

Le codeur vidéo 7 est ici de type hybride à prédiction et transformation, il combine une boucle de prédiction inter-image appliquée dans la dimension temporelle aux signaux modulés par impulsions codées différentielles, une transformation en cosinus discrète et directe à partir des blocs, une quantification des coefficients obtenus par transformation directe et un codage à longueur variable,de plus la prédiction implique une quantification inverse et une transformation en cosinus, discrète et inverse au niveau du codeur pour une simulation réaliste d'image transmise.

Un premier opérateur 18 de transformation en cosinus discrète et directe est relié par un multiplexeur 19 aux sources d'informations de bloc que sont susceptibles de constituer le convertisseur de standard 15, la mémoire de conversion de balayage 16 et certains éléments constitutifs de la boucle de prédiction qui seront définis plus loin.

Ce premier opérateur de transformation 18 effectue une transformation bi-dimensionnelle de taille 8x8 sur les blocs qu'il reçoit, comme prévu dans la recommandation H261 et permet d'obtenir, comme il est connu, une bonne décorrélation des coefficients dans le domaine transformé et une concentration statistique de ces coefficients dans une région restreinte du plan transformé, de plus certaines des opérations sur les coefficients, notamment leur suppression, la modification et la quantification de leurs amplitudes, sont assimilables à des opérations de filtrage linéaire dans du bruit.

Un premier quantificateur 20 est relié en sortie de l'opérateur de transformation 18, afin d'assurer la compression réductrice de débit nécessaire à la transmission des informations d'image par la ligne téléphonique L, cette quantification étant elle aussi globalement définie dans la recommandation H261.

De manière connue, des modes de codification différents sont susceptibles d'être choisis pour les blocs, en particulier un mode, dit intra, en l'absence de prédiction et un mode à prédiction, dit inter, où entrent éventuellement en compte une estimation de mouvement et/ou un filtrage, le même mode étant usuellement mis en oeuvre pour tous les blocs transmis d'un macrobloc.

Les coefficients de très grande amplitude sont écrêtés ceux d'amplitude très faible sont éliminés par l'application d'une quantification uniforme dont le pas définit le nombre de bits à transmettre; une quantification différente est normalement appliquée sur la composante continue représentant la valeur moyenne d'un bloc à transmettre, lors d'un codage en mode intra pour que cette valeur soit clairement définie, comme le développe l'article "Visages " mentionné plus haut.

Un second quantificateur 21 et un agencement 22 de codage entropique et de multiplexage vidéo sont parallèlement reliés en sortie du premier quantificateur 20.

Les quantificateurs 20 et 21 sont inverses l'un de l'autre, le second d'entre eux attaquant un second opérateur 23 de transformation discrète en cosinus agissant en inverse par rapport au premier opérateur 18.

L'ensemble formé par le second quantificateur 21 et par le second opérateur 23 permet de reconstituer, à des fins de prédiction, une image correspondant à celle qui est reconstruite par le codec 1', afin d'être affichée par le récepteur à écran de télévision 4 distant; les données numériques d'information d'image reconstituée localement qui sont obtenues, doivent donc être temporairement stockées pour servir de base pour la prédiction.

Cette dernière permet de ne transmettre que les seules informations qui correspondent à des modifications apparues sur une image par rapport à la précédente, ces informations étant établies à partir des différences transformées et codées entre une image à coder et la prédiction obtenue à partir de l'image précédente localement reconstituée.

Le stockage temporaire des données numériques traitées par le second opérateur 23 est assuré par une mémoire 24, dite d'image, apte par exemple à conserver les octets qui correspondent aux informations relatives à une image qui est à la fois transmise et simultanément décodée localement.

Un multiplexeur 25 est inséré entre le second opérateur 23 et la mémoire d'image 24 pour permettre de tenir compte du choix de mode inter ou intra de codage choisi, les données numériques étant directement transmises du second opérateur 23 au multiplexeur 25, sans autre intervention, dans le cas d'usage du mode intra, alors qu'elles sont éventuellement soumises à l'action d'un additionneur 26 dans le cas du mode inter, c'est-à-dire lorsqu'une prédiction temporelle est mise en oeuvre.

Cette prédiction temporelle s'effectue en recherchant ce qui différencie une image reconstituée de l'image précédente, seules les différences significatives entre images étant alors transmises, après transformation et codage, à l'appareillage distant.

A cet effet, il est prévu un agencement de prédiction qui reçoit les données numériques lui permettant d'établir les différences entre images, ces données étant fournies par la mémoire d'image 24 et par la mémoire de conversion de balayage 16.

Des auxiliaires d'adressage 29 et 30 sont respectivement associés aux mémoires 24 et 28, ils sont placés sous le contrôle de l'agencement d'horloge du codec 1, de même que l'auxiliaire d'adressage 17 évoqué plus haut, cet agencement agissant en ligne avec l'agencement de prédiction dans le cas de la mémoire d'image 24.

Comme indiqué plus haut la prédiction est préférablement hybride et associe une estimation de mouvement et un filtrage à une prédiction temporelle proprement dite.

Un agencement d'estimation de mouvement 31 est relié par une liaison B, de type bus, à la mémoire d'image 24 et à la mémoire de conversion de balayage 16 pour estimer les déplacements intervenus en passant d'une image à la suivante à partir d'une analyse mettant à profit l'organisation par blocs des informations d'image reconstituée.

Cet agencement d'estimation 31 permet de déterminer si, pour un bloc donné d'une image pour lequel une prédiction est en cours, il existe un bloc au moins globalement correspondant dans l'image précédente et si dans ce cas , il y a eu un déplacement du bloc donné par rapport au bloc correspondant de cette image précédente.

Ceci permet de pouvoir ne rien transmettre à destination de l'appareillage distant dans le cas des blocs restés fixes d'une image à l'autre, de pouvoir ne transmettre qu'une indication codée de vecteur de mouvement accompagnée d'une estimation codée d'erreur de prédiction en cas de déplacement détecté et à défaut d'effectuer un codage en mode intra pour les blocs sans correspondants dans l'image précédente, qui sont normalement relatifs à des portions d'image nouvelles.

Les agencements d'estimation de mouvement ne permettent usuellement pas de prédire de manière convenable les déplacements d'un bloc qui correspondent à des mouvements autres que de simple translations ou encore à ceux dans lesquelles le déplacement ne correspond pas exactement à un nombre entier de points d'image.

Aussi pour remédier à cet inconvénient, il est classiquement prévu un filtre numérique passe-bas 32, dit de boucle, relié à la liaison B et destiné à ne conserver que les basses fréquences prédites sans ambiguïté qui correspondent à des translations de bloc bien déterminées.

La sortie de ce filtre de boucle 32 attaque, d'une part, une entrée d'un multiplexeur 33 dont une autre entrée est reliée à la liaison B, d'autre part, une entrée d'un premier sélecteur 34, lui-même reliée à la liaison B par une seconde entrée, ce sélecteur permet de déterminer en fonction du résultat du filtrage si les données numériques transmises par le multiplexeur 33 seront celles transmises par le filtre de boucle 32 ou celles présentes sur la liaison B et de commander en conséquence ce multiplexeur 33.

Ce dernier est relié en entrée d'un soustracteur 35 inséré en amont du multiplexeur 19 et du premier opérateur de transformation 18 dans le codeur vidéo 7, ainsi qu'en entrée d'un agencement 36 compensateur de retard de boucle en reconstruction d'image dont la sortie attaque une entrée auxiliaire de l'additionneur 26 déjà relié en sortie du second opérateur de transformation 23, de manière à affecter d'un même temps de transit entre multiplexeur 33 et multiplexeur 25 tant les données numériques reçues via l'additionneur 26 et l'agencement compensateur 36 que celles qui sont obtenues par l'intermédiaire du soustracteur 35, à partir de la mémoire de conversion de balayage 16 et via l'ensemble comportant le multiplexeur 19, les opérateurs de transformation 18 et 23 et les quantificateurs 20 et 21.

Un second sélecteur 37 est également inclus dans le codeur vidéo 7, il permet de déterminer, suite à l'un des adressages successifs de bloc d'image par l'auxiliaire d'adressage 17, si les données de bloc transmises au premier opérateur de transformation 18 par l'intermédiaire du multiplexeur 19, seront celles, dites en mode intra, provenant directement de la mémoire de conversion de balayage 16, sans modification, ou celles, dites en mode inter qui ont été préalablement traitées, en fonction des informations numériques provenant du multiplexeur 33, après estimation de mouvement et/ou filtrage avec pour référence une image précédente.

A cet effet, le second sélecteur 37 est essentiellement relié en sortie de la mémoire de conversion de balayage 16 et du multiplexeur 33.

Comme indiqué plus haut, l'agencement 22 de codage entropique et de multiplexage vidéo assure d'une part un codage à longueur variable des coefficients de transformation quantifiés qui, fournis par le premier quantificateur 20, sont eux de longueur fixes, d'autre part la constitution par un multiplexage temporel approprié du train de données numériques destiné à être transmis à l'appareillage distant 3, via la ligne L.

Le codage à longueur variable est par exemple du type décrit dans l'article "Visages" évoqué en page 1 de la présente demande et ne sera donc que sommairement évoqué ici. Comme signalé dans ce document de nombreux coefficients de transformation ne sont pas significatifs pour la reconstruction d'image et il découle des propriétés de la transformation discrète en cosinus que les coefficients n'ont qu'une faible probabilité d'avoir une amplitude élevée, en conséquence un codage à longueur variable s'avère intéressant et une solution efficace consiste à transmettre les amplitudes respectives des coefficients de transformation significatifs et les positions respectives de ces coefficients, ces positions étant préférablement fournies par référence à une trame de balayage d'image plutôt que par leurs coordonnées dans le plan d'image, pour des raisons de réduction du volume de données à transmettre. Le balayage de codage des positions à l'intérieur d'un bloc est préférablement de type zigzag et la position d'un premier coefficient de transformation significatif étant repérée par sa distance à un point choisi comme origine du balayage, les positions respectives des autres coefficients significatifs étant individuellement repérées par leur distance par rapport à la position du coefficient significatif précédent dans l'ordre de balayage.

L'amplitude et la position de chaque coefficient de transformation significatif d'un bloc est numériquement codée par l'agencement 22 pour transmission au codec distant 1'.

Le multiplexage vidéo est réalisé de manière usuelle, il a pour objet de permettre la transmission selon une trame déterminée de l'ensemble des informations numériques nécessaires à la reconstitution des images par l'appareillage distant 3.

Ces informations numériques codées multiplexées sont fournies par les divers constituants de l'unité de codage qui interviennent sur les données, elles comprennent notamment des informations de synchronisation vidéo, des indications relatives aux adresses des macroblocs codés, au type de codage mis en oeuvre pour ces macroblocs, des indications sur les pas de quantification choisis, ainsi que sur le codage des vecteurs de mouvement et des coefficients ...

Les données sont par exemple organisées temporellement par niveaux respectivement d'image, de groupe de blocs, de macroblocs et de bloc.

Dans la mesure où le débit de données numériques en sortie de l'agencement 22 est naturellement variable et où la ligne numérique n'a éventuellement que des possibilités limitées de débit, il est nécessaire de disposer d'une mémoire tampon d'émission apte à stocker les données à transmettre, lorsque le débit temporaire de l'agencement 22 est supérieur à celui que peut supporter la ligne numérique L, les réductions temporaires de débit de cet agencement 22 étant mises à profit pour vider au maximum, sur la ligne numérique L, cette mémoire tampon d'émission, ici référencée 8 comme indiquée plus haut.

Une régulation du débit est assurée par action du régulateur 10 sur le codeur entropique de l'agencement 22, le premier quantificateur 20 et/ou le second sélecteur 37, en fonction du remplissage de la mémoire tampon d'émission 8, le niveau de ce remplissage étant fourni au régulateur 10 par l'auxiliaire d'adressage 38 en écriture et lecture de cette mémoire, cet auxiliaire étant temporellement régi par une horloge de transmission, non représentée, via un lien ici référencé HT.

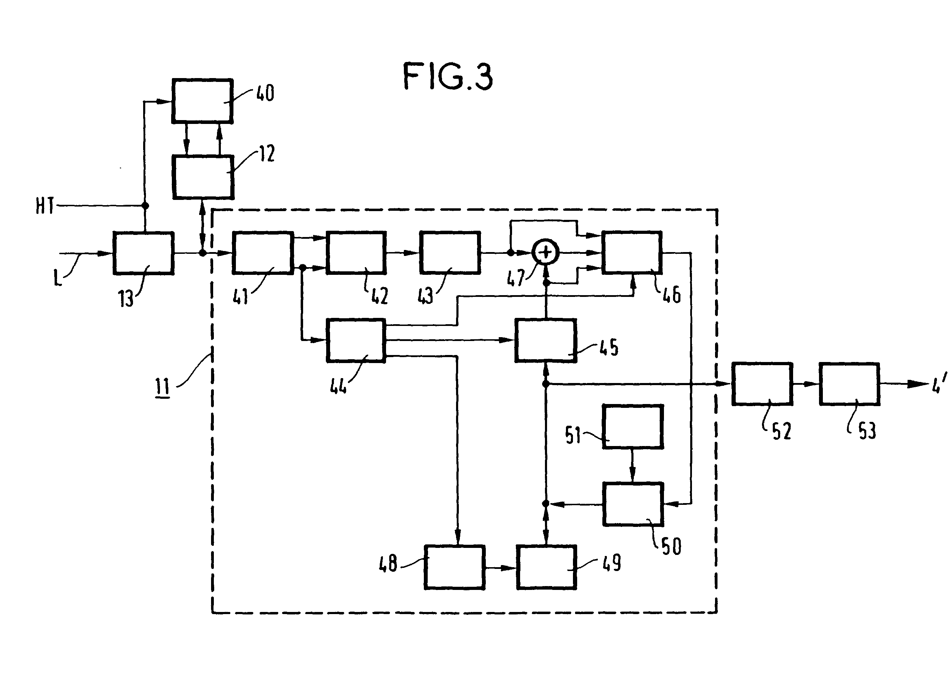

L'exemple d'unité de décodage vidéo 6 présentée en figure 3 est destinée à être reliée par l'intermédiaire d'une ligne L, à une unité de codage 5 telle que définie précédemment et par le lien HT à l'horloge de transmission évoquée ci-dessus .

Comme indiqué plus haut, cette unité de décodage 6 comporte un circuit de détramage 13 apte à exploiter les informations numérisées additionnelles introduites à son intention par le circuit d'insertion de codes de correction du codec 1' distant relié à lui par la ligne numérique L et transmises sur cette ligne en plus des informations numériques d'image émanant de l'agencement de codage entropique et de multiplexage vidéo de ce codec 1'.

L'unité de décodage 6 comporte aussi une mémoire tampon de réception 12 destinée à d'une part temporairement stocker les données numériques aux informations codées d'image qui, provenant de la ligne numérique L, transitent par le circuit de détramage 13 et d'autre part à restituer ses informations à un rythme acceptable par le décodeur vidéo 11.

Cette mémoire tampon de réception 12 est aussi temporellement régie par l'horloge de transmission via un lien HT qui aboutit à un auxiliaire de gestion 40 assurant l'adressage en mémoire et une régulation de débit en fonction des possibilités de traitement du décodeur vidéo 11 proprement dit.

Ce dernier assure un démultiplexage des informations vidéo et un décodage des codes à longueur variable par l'intermédiaire d'un agencement 41 de démultiplexage vidéo et de décodage entropique, inverse de l'agencement 22 de codage entropique et de multiplexage vidéo d'unité de codage évoqué plus haut,.

Les données numériques paraissant en sortie de l'agencement 41 de démultiplexage vidéo doivent être traitées dans le décodeur vidéo 11 afin de permettre de reconstituer les informations numériques nécessaires à la visualisation des images.

Ces données issues de l'agencement de démultiplexage vidéo sont donc transmises, dans but de reconstitution des images et suivant leur nature, soit à un ensemble de traitement associant un quantificateur 42 à un opérateur 43 de transformation en cosinus discrète et inverse, soit à un agencement 44 de compensation de retard d'un agencement de reconstruction d'image précisé ci-dessous.

Le quantificateur 42, correspond au second quantificateur 21 d'une unité de codage vidéo 5, tel que défini plus haut, l'opérateur 43 de transformation en cosinus discrète et inverse, correspond au second opérateur 23 de la même unité de codage vidéo 5.

Les informations numériques obtenues en sortie de l'opérateur 43, à partir des informations numériques fournies par la mémoire tampon de réception 12 au quantificateur 42, pour un bloc d'image, correspondent aux informations numériques apparues en sortie d'opérateur 23 pour le même bloc d'image.

L'agencement de reconstruction prend en compte les informations transmises qui sont relatives aux modes de codification employés pour les blocs relatifs aux images successives, c'est-à-dire celles qui permettent de déterminer si les macroblocs successivement reçus sont codés en mode inter ou intra, filtré ou non, compensé ou non.

A cet effet les informations numériques obtenues en sortie de l'agencement de compensation 44 permettent d'agir , le cas échéant et en premier lieu, sur un filtre de boucle 45 correspondant au filtre de boucle du codeur vidéo 7, en second lieu sur l'entrée de commande d'un multiplexeur 46, relié par ses entrées en sortie du troisième opérateur 43 et du filtre de boucle 45, soit directement soit via un additionneur 47 commun, et en troisième lieu sur un auxiliaire d'adressage 48 d'une mémoire d'images 49.

Une mémoire intermédiaire de retard 50 correspondant à la mémoire intermédiaire 28 du codeur vidéo 7 est intercalée entre la sortie du multiplexeur 46 et l'entrée de données de la mémoire d'images 49, elle a même rôle que cette mémoire intermédiaire 28 et elle comporte classiquement un auxiliaire d'adressage 51 ayant même fonction que l'auxiliaire 30 de la mémoire 28.

La mémoire d'images 49 assure l'enregistrement des informations numériques d'image qui lui sont fournies par le multiplexeur 46, via la mémoire intermédiaire de retard 50, elle conserve temporairement les informations numériques relatives à l'image précédemment reçue tant que celles relatives à une image en cours d'enregistrement ne sont pas totalement enregistrées, elle est exploitée pour une conversion de balayage qui permet de restituer des données pour un affichage d'image à balayage ligne par ligne à partir des données organisées par blocs et elle est également utilisée lors de la restitution à la fréquence d'image en vue de la visualisation, sachant que le codage antérieurement réalisé influe sur la fréquence d'apparition des images suivant leur contenu et suivant les sous échantillonnages éventuellement réalisés.

Un convertisseur de standard 52 est connecté en sortie de mémoire d'images 49 pour convertir les informations numériques d'une image reconstruite en format intermédiaire dans un format de visualisation usuel 525 ou 625 lignes, il est usuellement associé à un convertisseur numérique/analogique 53 permettant l'obtention de signaux d'image vidéo, de type analogique, exploitables par un récepteur à écran de télévision.

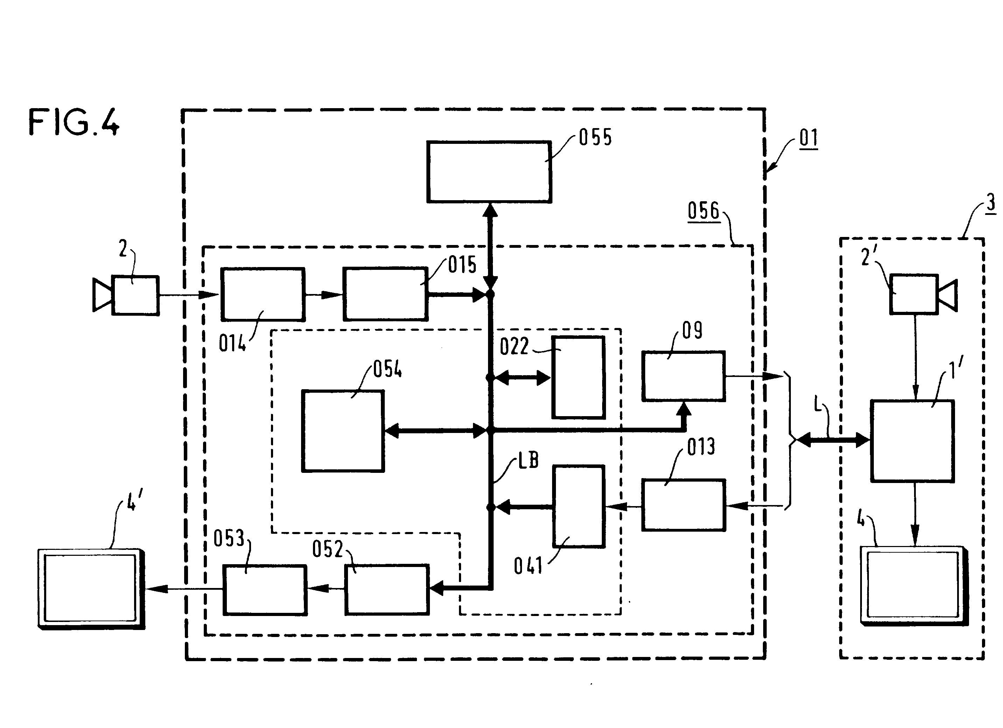

. Comme indiqué plus haut , la figure 4 présente un schéma de principe d'un codec vidéo 1A selon l'invention.

Ce codec vidéo 01 est destiné à se substituer au codec vidéo 1,tel que présenté en figure 1, et par conséquent à permettre, d'une part, le codage des signaux d'image vidéo fournis par une caméra de télévision 2 en vue de leur transmission par l'intermédiaire d'une ligne numérique L d'un réseau téléphonique, non représenté, à un autre codec 1' d'un appareillage distant 3 doté d'un récepteur à écran de télévision 4 permettant de présenter les images filmées, d'autre part le décodage des signaux d'image vidéo qui lui sont transmis par la ligne numérique L en signaux d'image vidéo exploitables par un récepteur à écran de télévision tel 4'.

Comme le codec 1 évoqué précédemment, le codec vidéo 01 est dépendant d'un processeur et d'une horloge externes non représentés, par contre il se différencie de celui-ci par le fait qu'il comporte une unité de traitement 054 et une mémoire principale 055, exploitées toutes deux tant pour le codage que pour le décodage.

Dans l'exemple proposé l'unité de traitement 054 fait partie d'un circuit, ici référencé 056, préférablement intégré de type à très large intégration (VLSI), qui comporte les autres éléments constitutifs du codec 01, à l'exception de la mémoire principale 055.

Cette dernière qui est de grande capacité, peut par exemple être composée d'au moins un boîtier de mémoire de type VIDEORAM, ou encore d'un boîtier de type DRAM.

L'unité de traitement 054 est reliée à la mémoire principale externe 055 par une ligne multifilaire LB, de type bus, à laquelle sont notamment reliés un agencement de codage entropique et de multiplexage vidéo 022 et un agencement de démultiplexage vidéo et de décodage entropique 041 ayant mêmes fonctions que les agencements de codage 22 et de décodage 41 du codec vidéo 1 défini précédemment.

Un circuit 09 d'insertion de codes de correction d'erreur et un circuit 013 de détramage et de correction d'erreurs sont prévus dans le circuit intégré 056 avec les mêmes fonctions que les circuits 9 et 13 d'un codec 1, ce qui les conduit à être insérés respectivement entre la ligne numérique L à laquelle est relié le codec 01 et, d'une part, le bus LB en ce qui concerne le circuit 09, d'autre part, cette ligne numérique L et l'agencement de démultiplexage vidéo et de décodage entropique 041, en ce qui concerne le circuit de détramage et de correction d'erreurs 013.

Deux convertisseurs de standard 015 et 052, fonctionnant en sens inverse l'un de l'autre, sont susceptibles d'être reliés à l'unité de traitement 054 par la liaison bus LB, via la mémoire principale externe 055.

Le convertisseur de standard 015 permet la mise au format intermédiaire choisi, des signaux d'image vidéo, après numérisation de ces signaux par un convertisseur analogique/numérique 014 avant traitement et transmission, le convertisseur de standard 052 permet la restitution en un format d'image vidéo, exploitable par un récepteur à écran de télévision, des signaux au format intermédiaire reçus par le codec 01.

Les convertisseurs de format 015 et 052 sont également prévus dans le circuit intégré 056, qui selon une variante de réalisation incorpore aussi le convertisseur analogique/numérique 014 et un convertisseur numérique/analogique 053 placé en sortie du convertisseur de format 052 pour restituer sous forme analogique les signaux d'image vidéo fournis par ce dernier.

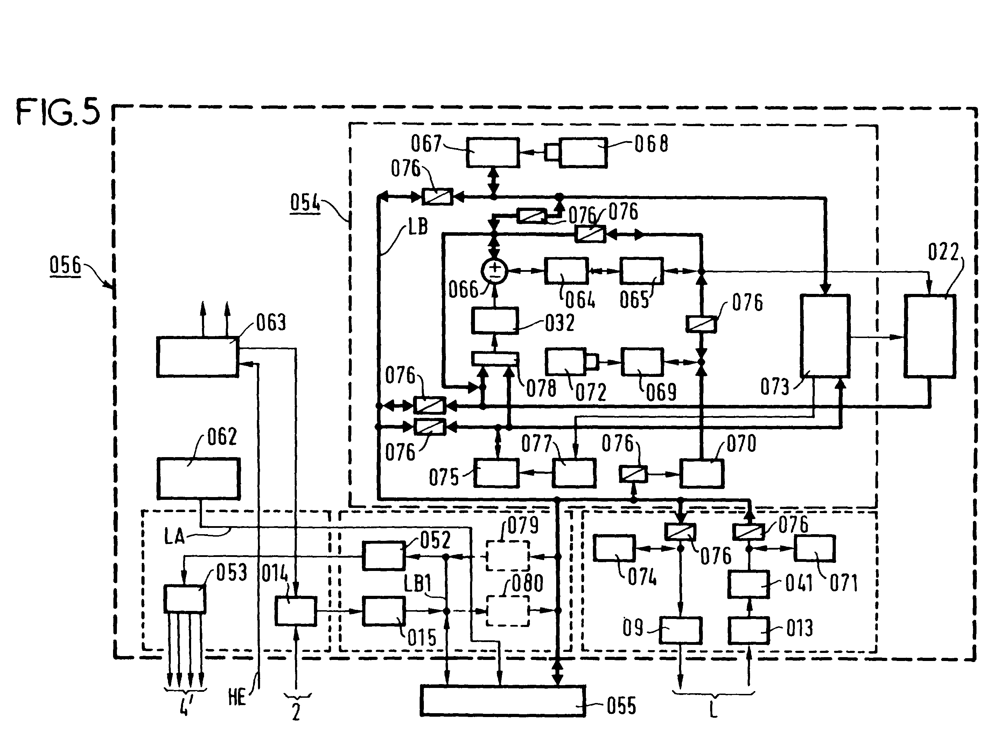

L'unité de traitement 054 est précisée sur la figure 5 qui montre le codec selon l'invention, c'est -à-dire le composant intégré 056 où est incorporée cette unité de traitement et la mémoire principale et externe 055.

L'unité de traitement 054 et la mémoire principale externe 055 sont destinées à assurer les fonctions habituellement imparties à un codeur vidéo tel que 7 et à un décodeur vidéo tel que 11, d'un codec classique, tel que 1, à l'exception des fonctions réalisées par l'agencement 22 de codage entropique et de multiplexage vidéo et l'agencement 41 de décodage entropique et de démultiplexage vidéo du codec connu 1 qui sont effectuées par des agencements 022 et 041 respectivement analogues dans le composant intégré 056.

La mémoire principale externe 055 est destiné à se substituer aux différentes mémoires réparties tant dans un codeur vidéo classique 1, telles que les mémoires 8, 16, 24, 28 définies plus haut que celles réparties dans un décodeur classique 11, telles que les mémoires 12, 49 et 50, elle est ici localement assistée par de petites mémoires auxiliaires tampons isolément définies par la suite et préférablement exploitées pour restreindre les échanges entre mémoire principale externe 055 et unité de traitement 054, lors de certaines phases d'exploitation évoquées plus loin.

Cette exploitation de mémoire principale externe est de type plan mémoire et s'effectue donc par l'intermédiaire de la liaison bus LB, par exemple de type multifilaire, qui assure des transferts bidirectionnels de données entre la mémoire principale externe et divers éléments constitutifs concernés soit pour le codage soit pour le décodage dans l'unité de traitement.

Un auxiliaire d'adressage 062, situé dans le circuit intégré 056 et relié à la mémoire principale externe 055 par une liaison d'adressage LA permet l'exploitation de cette mémoire principale externe par divers éléments constitutifs, évoqués plus loin, de l'unité de traitement 054, tant lors des phases de codage que lors de celles de décodage. Cette liaison d'adressage LA est temporellement exploitée de manière partagée, elle est choisie de type bus unique, lorsque la mémoire principale externe est modulaire.

Un agencement 063 associant un séquenceur à une base de temps placée sous le contrôle d'une horloge externe HE assure le déroulement des opérations effectuées au niveau du codec 01 et en particulier de l'adressage en mémoire principale externe 055 en agissant sur l'auxiliaire d'adressage d'une manière classique dans le domaine et par conséquent non développée ici.

L'unité de traitement 054 comporte un opérateur de transformation discrète en cosinus 064 et un quantificateur 065 montés en série et destinés à être exploités en partage de temps, soit tous deux en direct,soit tous deux en inverse, et ainsi à respectivement se substituer aux trois opérateurs de transformation en cosinus 18, 23 et 43, et aux trois quantificateurs 20, 21et 42 d'un codec classique, tel que 1.

L'ensemble formé par l'opérateur de transformation 064 et le quantificateur 065 est relié par le premier cité à un premier port d'un opérateur, dit vidéo, 066 alternativement additionneur ou soustracteur, dont un second port est relié à une branche, dite première branche, de la liaison bus LB et dont un troisième port est relié à la sortie d'un filtre de boucle 032 correspondant au filtre de boucle 32 d'un codec 1.

Le premier port de l'opérateur vidéo 066 permet la transmission au bus LB, via le second port, des données numériques correspondant au résultat fourni par l'opérateur de transformation 064 lorsque ce dernier fonctionne en inverse en aval du quantificateur 065 agissant lui aussi en inverse à partir des données numériques reçues soit d'une première mémoire auxiliaire tampon 067, dite de référence, lorsque l'ensemble évoqué ci-dessus est exploité en inverse, lors d'opérations destinées à une émission sur la ligne numérique L, soit d'une mémoire vive auxiliaire 069, dite de conversion de balayage, lorsque l'ensemble déjà évoqué est exploité en inverse, pour des opérations de réception par le codec vidéo 01.

Dans l'exemple présenté, la première mémoire de référence 067 est une mémoire vive alternativement exploitée pour temporairement mémoriser les données de luminance et de chrominance d'un macrobloc d'image, incidente ou prédite, qui est à coder aux fins d'émission, elle est régie par l'intermédiaire d'un auxiliaire d'adressage 068.

Les données relatives à un macrobloc d'image incidente, soit environ 3 Kbits dans un exemple de réalisation,sont fournies par la mémoire principale externe 055 qui les a elle-même reçues de la caméra 2, via un convertisseur analogique/numérique 014 et un convertisseur 015 fonctionnellement identiques au convertisseurs 14 et 15 du codec 1.

Dans une forme de réalisation de l'invention, le convertisseur analogique/numérique 014 est aussi incorporé dans le circuit intégré 056 de même que le convertisseur de format 015.

Les données relatives à un macrobloc d'image prédite quantifiée sont également fournies à la première mémoire de référence 067 par le quantificateur 065, via la liaison bus LB, ce quantificateur étant lui-même relié à la première branche de la liaison bus par un port lui servant de sortie lorsqu'il assure des quantifications directes.

Les données qu'il traite alors proviennent d'une seconde mémoire de référence 075, via la liaison bus LB, un multiplexeur 078, le filtre de boucle 032, l'opérateur vidéo 066 et l'opérateur de transformation 064; cette mémoire les ayant elle-même reçues de la mémoire principale externe 055. Les données fournies par la mémoire de conversion de balayage 069 au quantificateur 065 en aval de l'opérateur de transformation 064, dans l'ensemble que tous deux forment, lorsqu'ils sont exploités en inverse sont ici transmises via le port du quantificateur 065 évoqué ci-dessus, elles proviennent de la mémoire principale externe, via une seconde branche de la liaison bus LB et un bloc tampon de décodage 070.

A cet effet, cette dernière reçoit les données correspondant à au moins un et, dans l'exemple envisagé, deux blocs codés fournis par la mémoire principale externe 055, celle-ci les ayant préalablement reçus de la ligne numérique L, via un circuit de détramage et de correction d'erreurs 013, un agencement de démultiplexage vidéo et de décodage entropique 041 et une mémoire d'adaptation de débit à la réception 071. Cette dernière, de type premier entré-premier sorti, dit FIFO, est de petite taille ayant par exemple une capacité de 5x16 bits, elle permet de concilier les débits de traitement à l'intérieur du circuit intégré 056 et de transmission via la ligne en réception.

La mémoire de conversion de balayage 069 est exploitée dans ce cas pour reconstituer les coefficients de transformation d'un bloc à partir des données de positionnement par référence au balayage zigzag et d'amplitude qui ont été reçues via la ligne numérique L, elle n'a préférablement qu'une capacité limitée, par exemple de l'ordre de 1Kbits et est régie par un auxiliaire d'adressage 072.

La mémoire de conversion de balayage 069 est également exploitée en phase d'émission pour la conversion de balayage inverse qui permet d'obtenir les données relatives aux coefficients de transformation significatifs d'un bloc repérés en balayage zigzag à partir des coefficients de transformation tels que fournis par le quantificateur 065 fonctionnant alors en direct; elle est donc communément reliée au quantificateur 065, de la manière évoquée plus haut, et en entrée de l'agencement de codage entropique et de multiplexage vidéo 022.

Ce dernier reçoit aussi les informations émanant d'un agencement d'estimation et de sélection inter/intra 073 qui assure et regroupe les fonctions imparties à l'agencement d'estimation de mouvement 31 et au sélecteur 37 de mode inter/intra d'un codec 1.

Les données numériques extraites des informations reçues par l'agencement de codage entropique et de multiplexage vidéo 022, via ses entrées, sont multiplexées, codées puis transmises sur la liaison bus LB par l'intermédiaire d'une troisième branche de cette liaison en vue de leur émission sur la ligne numérique L, via la mémoire principale externe 055 agissant en tant que mémoire d'émission, une petite mémoire d'adaptation de synchronisation à l'émission 074, de type FIFO, qui, ayant par exemple une capacité de 2x16 bits, est reliée à une cinquième branche de la liaison bus LB, et le circuit d'insertion de codes de correction d'erreur 09 inséré entre la mémoire d'adaptation 074 et la ligne numérique L.

L'agencement 073 regroupant les fonctions d'estimation et de sélection inter/intra est relié à la première mémoire de référence 067 par une première entrée et via une première branche de la liaison bus LB, il est aussi relié à la seconde mémoire de référence 075 par une seconde entrée et via une sixième branche de la liaison bus LB. Cette sixième branche de même que celles précédemment nommées est classiquement reliée par un tampon d'isolement 076 au tronc proprement dit de la liaison bus LB qui raccorde le circuit intégré 056 à la mémoire principale externe 055.

La seconde mémoire de référence 075 est par exemple une mémoire vive qui a une capacité de l'ordre de 8 Kbits, elle est régie par un auxiliaire d'adressage 077 contrôlé par l'agencement séquenceur 063, comme les autres auxiliaires d'adressage du circuit intégré 056, et par l'agencement d'estimation et de sélection inter/intra 073.

Cette seconde mémoire de référence 075 est destinée à temporairement stocker soit les données de luminance relatives à la zone de recherche pour un bloc dont le mouvement est à estimer à chaque phase d'estimation, soit les données de luminance et de chrominance de la vidéo prédite et donc éventuellement déplacée, elle communique avec la mémoire principale externe 055 par la liaison bus LB.

La sixième branche de la liaison bus LB qui relie la seconde mémoire de référence 075 à l'agencement d'estimation et de sélection inter/intra 073, dessert aussi une première entrée du multiplexeur 078 contrôlant l'accès au filtre de boucle 032, qui dans l'exemple proposé est un filtre spatial bi-dimensionnel 3x3.

Une seconde entrée du multiplexeur 078 est reliée d'une part à la troisième branche, d'autre part à la quatrième branche de la liaison bus LB.

Comme indiqué plus haut la mémoire principale externe 055 est susceptible d'être réalisée à l'aide de boîtiers, de type VIDEORAM, qui comportent un port de données lent P1 auquel est alors reliée la liaison bus LB, un port de données rapide P2 auquel les convertisseurs de standard 015 et 052 sont alors raccordés, et une entrée d'adressage AD à laquelle est reliée l'auxiliaire d'adressage externe 062 incorporé dans le circuit intégré 056.

La mémoire principale externe 055 est également susceptible d'être constituée par un boîtier, de type DRAM, qui possède un port de données auquel est reliée la liaison bus LB et un port d'adressage AD auquel accède l'auxiliaire d'adressage externe 062.

Les convertisseurs de standard 015 et 052 sont alors respectivement connectés à la liaison bus LB par l'intermédiaire de mémoires tampons, de type premier entré-premier sorti, 079 et 080, à l'intérieur du circuit intégré 056 dont ils font, comme précédemment, partie.

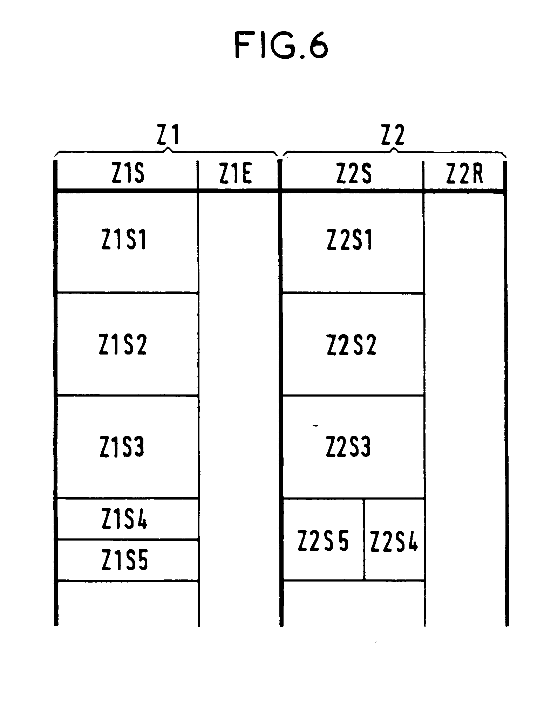

Un exemple préféré d'organisation interne de la mémoire principale 055 est schématisé sur la figure 6. La mémoire composée par une série de "n" plans parallèles, par exemple 8 ou 16, identiquement configurés et simultanément accédés, est ici symbolisée par un seul de ces plans qui est divisé en deux zones principales Z1 et Z2 respectivement réservées l'une aux données à stocker à des fins d'émission, l'autre aux données à stocker à des fins de visualisation locale et donc en particulier à celles qui correspondent à des informations d'image reçues au travers de la ligne numérique L.

La zone principale Z1, relative aux données d'émission, comporte essentiellement une zone tampon d'émission Z1E correspondant fonctionnellement à la mémoire tampon d'émission 8 d'un codec 1, et une zone Z1S de stockage temporaire de données d'image à traiter pour émission.

La zone de stockage de données d'image Z1S se subdivise elle-même en secteurs, un premier secteur référencé Z1S1 reçoit les données d'une image en cours d'acquisition qui ont pour origine la caméra 2, deux autres secteurs, référencés Z1S2 et Z1S3, sont interchangeables, l'un d'entre eux stocke temporairement les données de l'image précédente modifiées au fur et à mesure de leur prédiction, alors que l'autre stocke temporairement les données de l'image encore précédente telles qu'obtenues après prédiction, ces dernières étant exploitées pour la prédiction en cours de l'image suivant celle dont elles font partie.

Chacun des secteurs Z1S2 et Z1S3 assure ainsi successivement et cycliquement les deux stockages ci-dessus définis.

Optionnellement, la zone de stockage Z1S est susceptible de comporter un secteur Z1S4 dans lequel sont stockées des données d'image préenregistrée, par exemple d'image fixe, du type mire, destinée à être substituée aux images de la caméra en cours d'émission dans certains cas d'exploitation; cette zone peut également comporter un ou des secteurs réservés à des données de traitement liées à l'émission, par exemple des données exploitées pour la régulation dans un secteur tel que Z1S5.

La zone principale Z2 comporte essentiellement une zone tampon de réception Z2R correspondant fonctionnellement à la mémoire tampon de réception 12 du codec 1 et une zone Z2S de stockage temporaire de données relatives à l'image destinée à être localement affichée sur l'écran de télévision du récepteur 4'.

La zone de stockage temporaire Z2S se subdivise en secteurs, un de ces secteurs, référencé Z2S1, reçoit les données d'une image en cours d'acquisition en réception; deux autres secteurs, référencés Z2S2 et Z2S3, stockent temporairement et alternativement l'un les données de l'image précédemment acquise, l'autre les données de l'image encore précédente telle que traitée.

Chacun des trois secteurs Z2S1, Z2S2 et Z2S3 assure successivement et cycliquement les trois stockages évoqués ci-dessus.

Optionnellement, la zone de stockage Z2S est susceptible de comporter un secteur Z2S4 permettant de stocker les données d'une image destinée à être incrustée dans la prochaine image localement visualisée, l'image à incruster pouvant correspondre à l'image telle que simultanément transmise au travers de la ligne numérique L.

Un secteur supplémentaire Z2S5 peut également être prévu pour l'insertion de texte, par exemple à la demande, dans une image.

D'autres secteurs peuvent être prévus au niveau de la zone Z2S, ou ailleurs dans la mémoire principale pour des données de traitement, telles que par exemple des données de définition de jeux de caractères pour le texte à insérer, ou encore des données de configuration du codec vidéo 01 alors prévues fournies par l'intermédiaire du processeur, non représenté, supervisant le codec vidéo 1 dans l'appareil où ce codec est incorporé.

Dans un exemple de réalisation, le traitement par le codec vidéo 01 d'une image fournie par la caméra 2 débute par une conversion en numérique par le convertisseur 014 des signaux analogiques émanant de la caméra et par la mise au format QCIF par le convertisseur de standard 015 qui effectue des filtrages horizontaux et verticaux sur les données numériques issues du convertisseur 014.

Ces données numériques de luminance et de chrominance sont transmises par la liaison bus LB à la mémoire principale externe où elles sont stockées dans le secteur Z1S1 réservé au stockage d'image incidente.

Dès que les données stockées dans ce secteur sont en quantité suffisante pour permettre leur traitement par macrobloc, ce traitement est commencé, ce qui implique une transmission macrobloc par macrobloc du secteur Z1S1, où ils sont stockés, à la première mémoire de référence 067 prévue pour contenir un macrobloc.

Pour qu'une estimation de mouvement puisse être entreprise pour un macrobloc MA1 temporairement mémorisé en première mémoire de référence 067, il est prévu que la seconde mémoire de référence 075 contienne des données d'image précédente relatives à la zone susceptible de contenir un macrobloc correspondant au macrobloc MA1.

Dans l'exemple choisi, ces données proviennent d'un des secteurs de la mémoire principale externe 055 où sont alors mémorisées les données d'image qui ont été obtenues, après prédiction et déplacement éventuel, à partir de l'image qui précède l'image dont fait partie le macrobloc MA1, par exemple le secteur Z1S3.

Dans la réalisation envisagée, ce sont les données de luminance relatives à la zone prédéfinie de recherche de macrobloc qui sont prises en compte pour l'estimation, cette zone de recherche ayant ses données temporairement stockées en seconde mémoire de référence 075, comme indiqué ci-dessus.

L'estimation de mouvement effectuée pour un macrobloc permet de définir le mode de codage intra ou inter à mettre en oeuvre pour les blocs de ce macrobloc, le mode inter étant ici choisi lorsqu'un vecteur de mouvement est apte à traduire un déplacement intervenu.

Le déplacement constaté est pris en compte au niveau de la seconde mémoire de référence 075 en vue de l'émission proprement dite.

Après estimation de mouvement et calcul de prédiction, le macrobloc MA1 subit une transformation en cosinus directe par l'opérateur 064 et une quantification directe par le quantificateur 065, les données prises en compte étant, en mode intra, celles stockées en première mémoire de référence 067 en mode intra, auxquelles, se retranchent au niveau de l'opérateur vidéo 066 les données provenant de la seconde mémoire de référence 075, via le filtre de boucle 032, en mode inter.

Les données relatives à la vidéo prédite quantifiée qui sont fournies par le quantificateur 065 travaillant en direct, sont écrites en première mémoire de référence 067 en vue d'être traitées en inverse pour correspondre à celles qui seront vues par le codec distant; elles sont aussi transmises à l'agencement de codage entropique et de multiplexage vidéo 022, après conversion par relecture en balayage zigzag au niveau de la mémoire de conversion de balayage 069 qui les reçoit temporairement.

L'agencement 022 reçoit également des informations codées, relatives notamment aux blocs codés transmis et aux vecteurs de mouvement utilisés pour les macroblocs déplacés, en provenance de l'agencement d'estimation de mouvement et de choix inter-intra 073.

Les données multiplexées et codées entropiquement fournies par l'agencement 022 sont alors transmises par l'intermédiaire de la liaison bus LB à la mémoire principale externe 055, afin d'être temporairement stockées dans la zone tampon d'émission Z1E avant envoi sur une voie émission VE de la ligne numérique L, via la mémoire d'adaptation de débit 074 et le circuit 09 d'insertion de code d'erreur.

Simultanément les données de prédiction quantifiée stockées en première mémoire de référence 067, après quantification directe, sont restituées et traitées en inverse par l'ensemble série formé par le quantificateur 065 et par l'opérateur de transformation cosinus 064, elles sont combinées au niveau de l'opérateur vidéo 066 avec les données relatives à la vidéo de référence déplacée encore contenue dans la seconde mémoire de référence 075 dans un but de reconstitution locale du macrobloc transmis.

Ce dernier est alors écrit dans la première mémoire de référence 067, en vue d'être transmis à la mémoire principale externe 055 par la liaison bus LB et d'y être temporairement stocké dans le secteur Z1S2, afin de constituer l'image prédite qui sera exploitée pour le traitement de l'image suivante.

Le traitement par le codec vidéo 01 d'une image reçue via une voie réception de la ligne numérique L débute par une exploitation, par le circuit de détramage et de correction d'erreurs 013, des données provenant du codec 1' distant, puis par le traitement de ces données par l'agencement de démultiplexage vidéo et de décodage entropique 041.

Après passage par la mémoire d'adaptation de débit à la réception 071, les données reçues sont transmises à la mémoire principale externe 055 où elles sont temporairement stockées dans la zone tampon de réception Z2R, avant d'être traitées.

Les données contenues en zone Z2R sont ensuite transmises au bloc tampon de décodage 070 par groupes correspondant chacun à deux blocs de vidéo codée, puis delà à la mémoire de conversion 069, en vue d'y subir une conversion de balayage. La mémoire de conversion 069 permet de reconstituer les données relatives à l'ensemble des coefficients relatifs à un macrobloc à partir des données reçues pour ce macrobloc. Ces données obtenues par conversion sont alors quantifiées et transformées en inverse par l'ensemble constitué par le quantificateur 065 et par l'opérateur de transformation discrète en cosinus 064.

La mémoire principale externe 055 fournit simultanément à une entrée du multiplexeur 078 les données correspondantes relatives à l'image reçue précédente, telle que reconstruite, qui ont été stockées dans l'un des trois secteurs interchangeables de la zone Z2S et par exemple Z2S1, lors de la reconstruction locale de cette image précédemment reçue.

Les données relatives à un macrobloc donné d'image qui sont extraites du secteur de mémoire principale concerné, soit dans le cas Z2S1, sont alors transmises, via le filtre de boucle 032, afin d'être combinées par l'opérateur vidéo 066 avec celles provenant éventuellement de l'opérateur de transformation 064 pour le bloc correspondant de l'image suivante.

Les données simultanément obtenues en sortie d'opérateur vidéo 066, qui sont relatives à un macrobloc d'image reconstituée, sont immédiatement inscrites dans un des secteurs, de la zone Z2S de mémoire principale externe 055, par exemple Z2S2, où viennent se stocker les macroblocs successivement produits par l'opérateur vidéo 066 pour l'image alors en cours de reconstruction.

Dans une forme choisie de réalisation, le troisième secteur interchangeable de zone Z2S, soit dans l'exemple choisi Z2S3, est choisi pour stocker l'image reconstruite destinée à être envoyée au récepteur à écran de télévision 4 local, dans la mesure où la fréquence image acceptée par ce récepteur, soit usuellement 50 ou 60 Hz, ne correspond pas à celle de traitement et où cette solution permet de dissocier le traitement des données en réception de l'affichage sur écran qui en découle.

D'une manière générale, la caméra 2 d'une part et la ligne L d'autre part sont susceptibles de fournir simultanément des données d'image à des rythmes déterminés au codec vidéo 01, ce dernier doit travailler en temps partagé en émission en réception et en traitement et selon une organisation temporelle déterminée.Celle-ci est fonction des signaux d'horloge d'échantillonnage d'image qui sont définis par la recommandation 601 du CCIR, la fréquence d'horloge HE étant par exemple choisie égale à 6,75 MHz en émission et en réception.

La fréquence de traitement, ou fréquence point, doit prendre en compte le fait qu'il est préférable qu'à une image corresponde un nombre entier de périodes d'horloge de traitement et ce avec les principaux standards normalisés d'image ce qui conduit à une fréquence minimale de traitement de 2,5 MHz si les standards pris en compte sont ceux évoqués plus haut.

La fréquence de traitement et la fréquence d'échantillonnage doivent être synchrones pour faciliter les échanges à l'intérieur du codec vidéo 01.

Dans une variante préférée de réalisation, la fréquence de traitement choisie est de 4,5 MHz, de telle sorte qu'une ligne vidéo correspond à 288 cycles à cette fréquence de traitement, lorsque le nombre d'images par seconde est de 12,5; le temps de traitement d'un macrobloc est alors de 2880 cycles, soit 640 µs et correspond à une trame de dix temps de ligne égaux, référencés de T0 à T9, chaque temps de ligne étant lui-même composé de quatre sous-temps.

En effet, certains des accès mémoire en mémoire principale externe 055 doivent impérativement être synchrones de la fréquence ligne vidéo, tels l'écriture en mémoire des données d'image fournies par la caméra 2 et la lecture des données d'image à afficher sur l'écran de télévision du récepteur 4', alors que d'autres doivent impérativement être synchrones de la fréquence de traitement des blocs, tels la lecture et l'écriture des données des macroblocs mises en oeuvre lors du traitement d'image proprement dit par l'unité de traitement 054. Par contre d'autres accès ont un positionnement relativement indifférent, tels celui pour écriture dans le secteur tampon de réception et celui pour lecture dans le secteur tampon d'émission.

Dans l'exemple présenté, le premier temps T0 d'un groupe G est affecté au processus d'émission par le codec 01 et plus particulièrement au chargement en seconde mémoire de référence 075 des données de luminance correspondant à la zone où sera recherché le macrobloc à traiter dont les données de luminance ont préalablement été chargées en première mémoire de référence 067 lors du temps T9 du groupe précédent, alors que les données de chrominance correspondantes sont chargées dans cette même première mémoire au cours du temps T5 suivant.

Les quatre temps T1 à T4 du groupe G sont simultanément exploités pour le processus d'émission et pour le processus de réception en mettant à profit le fait que les éléments du codec qu'ils mettent en oeuvre ne sont pas identiques et peuvent donc agir séparément. Trois réceptions successives de blocs par paire sont ici réalisées à raison d'une réception de paire de blocs en cinq sous-temps, un des seize sous-temps possibles n'étant pas exploité. Simultanément l'estimation de mouvement et le choix inter-intra sont réalisés pour le macrobloc temporairement stocké en première mémoire de référence 067 à l'aide du contenu de la seconde mémoire de référence 075, ces mémoires étant l'une et l'autre inexploitées en réception.

Le temps T5 est partiellement et successivement réservé à une régulation de débit qui ne sera pas développée ici, ainsi qu'au stockages respectifs et successifs, en seconde mémoire de référence 075, de la prévision déplacée relative au macrobloc pour lequel l'estimation de mouvement vient d'être réalisée et, en première mémoire de référence 067, des données de chrominance du macrobloc qui sera traité au cours des quatre temps suivants.

Le temps T6 est réservé au traitement de transformation discrète en cosinus et de quantification, directes de macrobloc, en vue d'émission, par l'opérateur 064 et le quantificateur 065 du codec 01.

Les temps T7 et T8 sont essentiellement réservés, d'une part, au traitement de transformation discrète en cosinus et de quantification, inverses de macrobloc, en vue de reconstruction locale en liaison avec le processus d'émission, par le même opérateur 064 et le même quantificateur 065, d'autre part à l'écriture, dans la zone tampon d'émission Z1E de la mémoire principale externe 055, des données présentes en sortie de l'agencement de multiplexage et de codage entropique 022.

Le temps T9 de fin de groupe est alors essentiellement réservé à l'écriture du macrobloc de vidéo qui vient d'être reconstitué dans le secteur concerné de la mémoire principale externe, puis ensuite à l'écriture en première mémoire de référence 067 des données de luminance relatives au macrobloc à traiter pour émission au cours du groupe de dix temps suivant.

## Revendications

1. Codec vidéo (01), notamment pour applications visiophoniques et en particulier pour terminal visiophonique de réseau numérique à intégration de services, prévu pour pouvoir recevoir, d'une part, des signaux d'image provenant d'une caméra de télévision (2) locale afin de les émettre, après les avoir compressés et codés selon des procédés connus et à des fins de transmission, vers une unité de décodage vidéo distante et compatible, notamment d'un autre codec vidéo (1'), par l'intermédiaire d'une ligne de transmission numérique (L), notamment de type téléphonique, et pour recevoir d'autre part, des signaux d'image similairement compressés et codés par une unité de codage vidéo distante, en particulier dudit autre codec vidéo, par l'intermédiaire de la ligne de transmission numérique (L) , afin de les décompresser et décoder au profit d'un récepteur à écran de télévision (4') localement relié à lui,
caractérisé en ce qu'il comporte une unité de traitement (054) assurant en liaison avec un plan mémoire externe unique, tant la compression et le codage des données à émettre que la décompression et le décodage des données reçues, ladite unité de traitement comportant un ensemble formé par un opérateur de transformation discrète en cosinus (064), dit DCT, et un quantificateur (065) montés en série, ledit ensemble étant relié par ledit opérateur DCT à un premier port d'un opérateur (066), dit vidéo, fonctionnant alternativement comme additionneur ou comme soustracteur, dont un second port est relié à une première branche d'une liaison bus multifilaire (LB) et dont un troisième port est relié à la sortie d'un filtre numérique passe-bas (032), dit de boucle,ledit ensemble étant exploité en partage de temps en association avec ledit filtre de boucle, ladite unité fonctionnant d'une part, premièrement en direct puis en inverse en ce qui concerne ledit ensemble pour le traitement des macroblocs d'image à l'émission, d'autre part, en inverse en ce qui concerne ledit ensemble, pour le traitement des macroblocs d'image à la réception, ledit plan mémoire unique comportant une mémoire externe et principale (055) reliée par ladite liaison bus multifilaire à l'unité de traitement pour le stockage temporaire d'images, respectivement à des fins d'émission, de réception et de traitement avant émission ou après réception, ainsi qu'éventuellement à des fins d'incrustation locale.

2. Codec vidéo, selon la revendication 1, caractérisé en ce que l'unité de traitement (054) dans laquelle est situé l'ensemble constitué par l'opérateur de transformation discrète en cosinus (064) et le quantificateur (065), comporte aussi un agencement d'estimation de mouvement et de choix inter-intra (073) et deux mémoires, vives, de référence (067) et (075) reliées à la liaison bus (LB), de même que l'opérateur et le quantificateur évoqués ci-dessus, et simultanément exploitées en partage de temps à l'émission, la première stockant successivement un macrobloc d'image incidente à traiter pour émission, tel qu'obtenu de la mémoire principale externe, puis la prédiction quantifiée correspondante obtenue lorsque le quantificateur travaille en direct, la seconde stockant successivement la zone d'image précédente, dans laquelle est recherché le macrobloc à traiter, telle que fournie par la mémoire principale externe, puis le résultat obtenu après éventuel déplacement du macrobloc traité sous l'action de l'agencement d'estimation de mouvement (073) relié par une première entrée à la première mémoire de référence, par une seconde entrée à la seconde mémoire de référence et par une sortie à un auxiliaire d'adressage (077) de cette seconde mémoire de référence.

3. Codec vidéo selon la revendication 1, caractérisé en ce que l'unité de traitement (054) dans laquelle est situé l'ensemble constitué par l'opérateur de transformation discrète en cosinus (064) et le quantificateur (065) comporte une mémoire, vive, de conversion de balayage (069) exploitée en partage de temps pour successivement permettre d'une part l'obtention des données relatives aux coefficients de transformation significatifs d'un bloc repérés en balayage, préférablement zigzag, à partir des coefficients de transformation reçus par ladite mémoire du quantificateur fonctionnant en direct pour émission, d'autre part la conversion inverse en réception à partir des données de positionnement par référence au balayage choisi et des données associées d'amplitude, reçues les unes et les autres au travers de la ligne numérique (L) et via un secteur tampon de réception (Z2R) de la mémoire principale externe.

4. Codec vidéo selon la revendication 1, caractérisé en ce que la mémoire principale externe (055), est reliée par la liaison bus (LB) tant à l'unité de traitement (054) incluse dans le circuit intégré (056) qu'à la sortie d'un agencement de codage entropique et de multiplexage vidéo (022) qui, inclus dans le circuit intégré , reçoit les données d'image provenant de l'unité de traitement pour être émises sur la ligne numérique et qui est commandé par un agencement d'estimation de mouvement et de choix inter-intra (073) de ladite unité de traitement.

5. Codec vidéo, selon la revendication 1, caractérisé en ce que la mémoire principale externe (055) est aussi reliée par la liaison bus (LB) à la ligne numérique (L) par l'intermédiaire d'un circuit d'insertion de codes de correction d'erreur (09), à l'émission, et d'un circuit de détramage et de correction d'erreurs (013), via un agencement de démultiplexage vidéo et de décodage entropique (041), en réception, lesdits circuits (09, 013) et ledit agencement (041) étant prévus dans le circuit intégré avec l'unité de traitement.

6. Codec vidéo, selon la revendication 1, caractérisé en ce que la mémoire principale externe (055), de type VIDEORAM, qui est reliée par un premier port à la liaison bus (LB) est reliée par un second port, de type série, à deux convertisseurs de standard vidéo (015 et 052),assurant respectivement la conversion à un format intermédiaire pour traitement des signaux vidéo reçus de la caméra locale, à des fins d'émission sur la ligne numérique et la conversion inverse pour les signaux traités par ce codec pour le récepteur à écran de télévision localement relié à lui.

7. Codec vidéo selon la revendication 1, caractérisé en ce que la mémoire principale externe (055), de type DRAM, est reliée par la liaison bus (LB) tant à l'unité de traitement (054) du circuit intégré (056) qu'à des convertisseurs de standard vidéo (015, 052) assurant respectivement la conversion des signaux vidéo, reçus de la caméra locale, à un format intermédiaire en vue de leur traitement et la conversion inverse pour les signaux fournis par l'unité de traitement pour le récepteur à écran de télévision local.

8. Codec vidéo selon la revendication 1, caractérisé en ce que la mémoire principale externe (055) est reliée à un auxiliaire d'adressage (062) qui, incorporé dans le circuit intégré (056), assure d'une part un adressage séparé, en écriture et en lecture, dans deux zones fixes (Z1E, Z2R) formant tampon l'une pour les signaux d'image traités à émettre sur la ligne numérique (L), l'autre pour les signaux reçus par cette ligne numérique et à traiter, d'autre part un adressage séparé réalisé de manière analogue dans trois secteurs de mémorisation d'image à émettre (Z1S1, Z1S2, Z1S3) respectivement affectés l'un au stockage des données d'une image de caméra en cours d'acquisition, et les deux autres, interchangeables, au stockage des données de l'image précédemment traitée et des données de l'image telle qu'en cours d'obtention par traitement, ainsi qu'un adressage séparé réalisé de manière analogue dans trois secteurs interchangeables de mémorisation d'image transmise (Z2S1, Z2S2, Z2S3) respectivement affectés l'un au stockage des données d'une image en cours de réception et les deux autres, au stockage des données de l'image précédemment reçue en cours de reconstruction et préférablement de l'image, précédemment reconstruite et en cours d'envoi au récepteur à écran de télévision (4), local.

## Patentansprüche

1. Videocodec (01), insbesondere für Bildtelefonanwendungen d.h. für ein Bildtelefon-Endgerät eines ISDN-Netzes, das einerseits von einer örtlichen Fernsehkamera (2) kommende Bildsignale empfangen und nach Kompression und Kodierung gemäß bekannten Verfahren zur Übertragung an eine entfernte und kompatible Video-Dekodiereinheit aussenden kann, insbesondere an ein anderes Videocodec (1') über eine digitale Übertragungsleitung (L), insbesondere Telefonleitung, und andererseits ähnlich komprimierte und kodierte Bildsignale von einer entfernten Videokodiereinheit, insbesondere von dem anderen Videocodec, über die digitale Übertragungsleitung (L) empfangen können, um sie zu dekomprimieren und zu dekodieren für einen Empfänger (4') mit einem Fernsehbildschirm, mit dem es örtlich verbunden ist, dadurch gekennzeichnet, daß das Codec eine Verarbeitungseinheit (054) aufweist, die in Verbindung mit einem gemeinsamen äußeren Speicher sowohl die Kompression und die Kodierung der auszusendenden Daten als auch die Dekompression und die Dekodierung der empfangenen Daten bewirkt und eine von einem diskreten Cosinustransformationsoperator (064), DCT genannt, und einem damit in Reihe geschalteten Quantifizierer (065) gebildete Einheit besitzt, die durch den DCT-Operator an einen ersten Port eines Videooperators (066) angeschlossen ist, der abwechselnd als Addierer und Subtrahierer arbeitet und dessen zweiter Port an einen ersten Zweig einer Mehrdraht-Busverbindung (LB) und dessen dritter Port an den Ausgang eines digitalen Tiefpaßfilters (032) vom Schleifentyp angeschlossen ist, wobei die Einheit zeitgeteilt in Verbindung mit dem Schleifenfilter betrieben wird und einerseits erst in direktem und dann in inversem Modus hinsichtlich der Einheit für die Verarbeitung der Bildmakroblöcke beim Aussenden und andererseits im inversen Modus hinsichtlich dieser Einheit für die Verarbeitung der Bildmakroblöcke beim Empfang arbeitet, wobei der gemeinsame Speicher einen äußeren Hauptspeicher (055) enthält, der über die MehrdrahtBusverbindung an die Verarbeitungseinheit für die vorübergehende Speicherung von Bildern zum Zwecke der Aussendung bzw. des Empfangs bzw. der Verarbeitung vor der Aussendung oder nach dem Empfang sowie ggf. für eine örtliche Einblendung verbunden ist.

2. Videocodec nach Anspruch 1, dadurch gekennzeichnet, daß die Verarbeitungseinheit (054), in der die aus dem diskreten Cosinustransformationsoperator (064) und dem Quantifizierer (065) gebildete Einheit liegt, außerdem eine Schaltung (073) zur Abschätzung der Bewegung und zur Wahl zwischen dem Interund dem Intra-Modus sowie zwei Bezugsarbeitsspeicher (067, 075) enthält, die an die Busverbindung (LB) genauso wie der oben erwähnte Operator und der Quantifizierer angeschlossen sind und gemeinsam zeitgeteilt in Senderichtung betrieben werden, wobei der erste Bezugsspeicher nacheinander einen ankommenden und für die Aussendung zu verarbeitenden Bildmakroblock, wie er vom äußeren Hauptspeicher empfangen wurde, und dann die entsprechende quantifizierte Vorhersage speichert, die erhalten wird, wenn der Quantifizierer im Direktmodus arbeitet, während der zweite Bezugsspeicher nacheinander die vorhergehende Bildzone, in der der zu verarbeitende Makroblock gesucht wird, wie sie vom äußeren Hauptspeicher geliefert wurde, und dann das Ergebnis speichert, das nach einer eventuellen Verschiebung des verarbeiteten Makroblocks unter der Wirkung der Bewegungsschätzschaltung (073) erhalten wurde, die mit einem ersten Eingang an den ersten Bezugsspeicher, mit einem zweiten Eingang an den zweiten Bezugsspeicher und mit einem Ausgang an die Hilfsadressierschaltung (077) dieses zweiten Bezugsspeichers angeschlossen ist.

3. Videocodec nach Anspruch 1, dadurch gekennzeichnet, daß die Verarbeitungseinheit (054), in der die vom diskreten Cosinustransformationsoperator (064) und dem Quantifizierer (065) gebildete Einheit sitzt, einen Arbeitsspeicher zur Abtastungsumwandlung (069) enthält, der zeitgeteilt betrieben wird, um nacheinander einerseits Daten bezüglich der signifikanten Transformationskoeffizienten eines bei der Abtastung, vorzugsweise der Zickzackabtastung, erfaßten Blocks ausgehend von Transformationskoeffzizienten zu erhalten, die der Speicher vom im direkten Modus für die Aussendung arbeitenden Quantifizierer empfängt, und um andererseits die umgekehrte Umwandlung in Empfangsrichtung durchzuführen ausgehend von den Positionierdaten unter Bezugnahme auf die gewählte Abtastung und den zugeordneten Amplitudendaten, die beide über die digitale Leitung (L) und einen Empfangspuffersektor (Z2R) des äußeren Hauptspeichers empfangen wurden.

4. Videocodec nach Anspruch 1, dadurch gekennzeichnet, daß der äußere Hauptspeicher (055) über die Busverbindung (LB) sowohl an die Verarbeitungseinheit (054), die in der integrierten Schaltung (056) enthalten ist, als auch an den Ausgang einer entropischen Kodier- und Videomultiplexierschaltung (022) angeschlossen ist, die ebenfalls im integrierten Schaltkreis enthalten ist, die Bilddaten von der Verarbeitungseinheit zur Aussendung auf der digitalen Leitung empfängt und von einer Schaltung (073) zur Schätzung der Bewegung und zur Auswahl zwischen dem Inter- und dem Intra-Modus der Verarbeitungseinheit gesteuert wird.

5. Videocodec nach Anspruch 1, dadurch gekennzeichnet, daß der äußere Hauptspeicher (055) auch über die Busverbindung (LB) und über eine Schaltung (09) zur Einfügung von Fehlerkorrekturkodes in Senderichtung bzw. über eine Schaltung (013) zur Rahmenzerlegung und zur Fehlerkorrektur über eine Videodemultiplexier- und entropische Dekodierschaltung (041) in Empfangsrichtung an die digitale Leitung (L) angeschlossen ist, wobei diese Schaltungen (09, 013) und die Schaltung (041) im integrierten Schaltkreis zusammen mit der Verarbeitungseinheit enthalten sind.

6. Videocodec nach Anspruch 1, dadurch gekennzeichnet, daß der äußere Hauptspeicher (055) ein VIDEORAM-Chip ist, der über einen ersten Port an die Busverbindung (LB), über einen zweiten Port vom Serientyp an zwei Videostandardwandler (015, 052), die die Umwandlung in ein Zwischenformat für die Verarbeitung der von der örtlichen Kamera empfangenen Videosignale für deren Aussendung auf der digitalen Leitung bzw. die Umwandlung in umgekehrter Richtung für die von dem Codec verarbeiteten Signale für den an den Codec örtlich angeschlossenen Fernsehempfänger durchführt.

7. Videocodec nach Anspruch 1, dadurch gekennzeichnet, daß der äußere Hauptspeicher (055) ein DRAM-Chip ist und über die Busverbindung (LB) sowohl an die Verarbeitungseinheit (054) des integrierten Schaltkreises (056) als auch an Videostandardwandler (015, 052) angeschlossen ist, die die Umwandlung der von der örtlichen Kamera empfangenen Videosignale in ein Zwischenformat für deren Bearbeitung und die umgekehrte Umwandlung der von der Verarbeitungseinheit im Zwischenformat gelieferten Signale für den örtlichen Fernsehempfänger bewirken.

8. Videocodec nach Anspruch 1, dadurch gekennzeichnet, daß der äußere Hauptspeicher (055) an eine Hilfsadressierschaltung (062) angeschlossen ist, die Bestandteil des integrierten Schaltkreises (056) ist und einerseits eine getrennte Adressierung in Schreib- und Leserichtung in zwei festen Zonen (Z1E, Z2R) durchführt, von denen die eine einen Puffer für die auf der digitalen Leitung (L) auszusendenden verarbeiteten Bildsignale und die andere einen Puffer für die von der digitalen Leitung empfangenen und zu verarbeitenden Signale bildet, und andererseits eine getrennte Adressierung in ähnlicher Weise in drei Speichersektoren (Z1S1, Z1S2, Z1S3) für das auszusendende Bild, von denen der eine Sektor der Speicherung der Daten eines Kamerabilds während der Erfassung und die beiden anderen austauschbar der Speicherung der Daten des vorher bearbeiteten Bilds und der Daten des gerade bearbeiteten Bilds dienen, sowie die getrennte Adressierung in gleicher Weise in drei austauschbaren Sektoren (Z2S1, Z2S2, Z2S3) bewirkt, von denen der eine der Speicherung der Daten eines gerade empfangenen Bilds und die beiden anderen der Speicherung der Daten des vorher empfangenen und gerade rekonstruierten Bilds und vorzugsweise des vorher rekonstruierten Bilds dienen, das gerade an den örtlichen Fernsehempfänger (4) gesendet wird.

## Claims

1. A video codec (01), particularly for videophone applications, and more particularly for a videophone terminal of an integrated services digital network, said codec being organized to receive firstly image signals coming from a local television camera (2) so as to transmit them, after compressing and encoding them using known methods for transmission purposes, to a compatible remote video decoding unit, in particular of another video codec (1'), via a digital transmission line (L), in particular of the telephone type, and secondly image signals similarly compressed and encoded by a remote video encoding unit, in particular of said other video codec, the similarly compressed image signals being received via the digital transmission line (L), and then being decompressed and decoded for a television screen receiver (4') locally connected to said video codec, said video codec being characterized in that it includes a processing unit (054) co-operating with a single external memory plane both to compress and encode data to be transmitted, and also to decompress and decode received data, said processing unit including an assembly formed by a discrete cosine transform operator (DCT) (064) and a quantifier (065) connected together in series, said assembly being connected by said DCT operator to a first port of a "video" operator (066) operating alternately as an adder or as a subtracter, a second port of the video operator being connected to a first branch of the multifilament bus link (LB), and a third port of the video operator being connected to the output of a low-pass digital "loop" filter (032), said assembly being time shared in association with said loop filter, said unit operating firstly, directly and then inversely as regards said assembly for processing macroblocks of image to be transmitted, and secondly, inversely as regards said assembly, for processing macroblocks of received image, said single memory plane including an external main memory (055) connected by said multifilament bus link to the processing unit for temporary image storage, respectively for the purposes of transmission, reception, and processing before transmission or after reception, as well as optionally for local insetting purposes.

2. A video codec according to claim 1, characterized in that the processing unit (054) including the assembly constituted by the quantifier (065) and the discrete cosine transform operator (064), also includes an inter-intra selection and movement estimation circuit (073) and two read/write reference memories (067 and 075) connected to the bus link (LB), in the same way as the operator and the quantifier mentioned above, and simultaneously time shared for transmission, the first memory successively storing a macroblock of incident image to be processed for transmission, as obtained from the external main memory, and then the corresponding quantified prediction obtained when the quantifier works directly, and the second memory successively storing the preceding image zone, in which the macroblock to be processed is sought, as supplied by the external main memory, and then the result obtained after any displacement of the processed macroblock under the action of the movement estimation circuit (073) connected via a first input to the first reference memory, via a second input to the second reference memory, and via an output to an addressing auxiliary (077) of the second reference memory.

3. A video codec according to claim 1, characterized in that the processing unit (054) including the assembly constituted by the quantifier (065) and the discrete cosine transform operator (064), also includes a read/write scanning conversion memory (069) time shared for successively making it possible firstly to obtain data relating to significant transformation coefficients of a block identified by scanning, preferably in zigzag, on the basis of transformation coefficients received by said memory from the quantifier operating directly for transmission, and secondly to perform the inverse conversion on reception on the basis of the positioning data by reference to the selected scanning, and on the basis of the associated amplitude data, received via the digital line (L) and via a buffer reception sector (Z2R) of the external main memory.

4. A video codec according to claim 1, characterized in that the external main memory (055) is connected via the bus link (LB) both to the processing unit (054) included in the integrated circuit (056), and also to the output of a video multiplexing and entropy encoding circuit (022) which is included in the integrated circuit, which receives the image data coming from the processing unit to be transmitted over the digital line, and which is controlled by an inter-intra selection and movement estimation circuit (073) of said processing unit.

5. A video codec according to claim 1, characterized in that the external main memory (055) is also connected via the bus link (LB) to the digital line (L) via an error correction code insertion circuit (09), on transmission, and via an error correction and framing recovery circuit (013), via an entropy decoding and video demultiplexing circuit (041), on reception, said circuits (09, 013, 041) being provided in the integrated circuit with the processing unit.

6. A video codec according to claim 1, characterized in that the external main memory (055), of the VIDEORAM type, which is connected via a first port to the bus link (LB), is connected via a second port, of the series type, to two video standards converters (015 and 052) respectively performing conversion to an intermediate format for processing the video signals received from the local camera, for the purposes of transmission over the digital line, and the inverse conversion for the signals processed by the codec for the television screen receiver locally connected thereto.

7. A video codec according to claim 1, characterized in that the external main memory (055), of the DRAM type, is connected via the bus link (LB) both to the processing unit (054) of the integrated circuit (056) and to the video standards converters (015, 052) respectively performing the conversion of video signals received from the local camera to an intermediate format so that they can be processed, and the inverse conversion for the signals supplied by the processing unit for the local television screen receiver.

8. A video codec according to claim 1, characterized in that the external main memory (055) is connected to an addressing auxiliary (062) which is incorporated into the integrated circuit (056), and which performs firstly separate read and write addressing in two fixed zones (Z1E, Z2R), one of which forms a buffer for the processed image signals to be transmitted over the digital line (L), and the other of which forms a buffer for the signals received via the digital line and to be processed, and secondly separate addressing in analogous manner in three storage sectors (Z1S1, Z1S2, Z1S3) for storing image to be transmitted, one of which sectors is assigned to storing the camera image data being acquired, and the other two sectors, which are interchangeable, are assigned to storing previously processed image data and image data as being obtained by processing, as well as separate addressing in analogous manner in three interchangeable transmitted image storage sectors (Z2S1, Z2S2, Z2S3), one sector being assigned to storing the data of an image being received, and the two other sectors being assigned to storing the data of the previously received image under reconstruction and preferably of the image previously reconstructed and in the course of being sent to the local television screen receiver 4.
